(19) Europäisches Patentamt
European Patent Office
Office européen des brevets

(11) **EP 2 794 774 B1**

(12) **EUROPEAN PATENT SPECIFICATION**

(45) Date of publication and mention
of the grant of the patent:
**28.07.2021  Bulletin 2021/30**

(21) Application number: **12809259.0**

(22) Date of filing: **19.12.2012**

(51) Int Cl.:
*C09D 5/16* (2006.01)  *G06Q 10/00* (2012.01)

(86) International application number:
**PCT/EP2012/076108**

(87) International publication number:
**WO 2013/092681 (27.06.2013 Gazette 2013/26)**

(54) **A PROCESS OF SELECTING AND APPLYING A PROTECTIVE COATING**

VERFAHREN ZUR AUSWAHL EINER FÄULNISSTEUERUNGSBESCHICHTUNG

PROCÉDÉ DE SÉLECTION D'UN REVÊTEMENT DE CONTRÔLE ANTISALISSURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **22.12.2011  EP 11195406
18.01.2012  EP 12151617
19.01.2012  US 201261588293 P
31.05.2012  EP 12170278**

(43) Date of publication of application:
**29.10.2014  Bulletin 2014/44**

(60) Divisional application:
**21172407.5**

(73) Proprietor: **Akzo Nobel Coatings International B.V.
6824 BM Arnhem (NL)**

(72) Inventors:
• **RAMSDEN, Richard Mark
Pelaw
Tyne and Wear NE10 0QS (GB)**

• **CURRAN, Robert Matthew
Newcastle upon Tyne
Tyne and Wear NE13 7HG (GB)**
• **THOMASON, Jeremy C.
Mérida
Yucatán CP 97111 (MX)**

(74) Representative: **Akzo Nobel IP Department
Velperweg 76
6824 BM Arnhem (NL)**

(56) References cited:
• **"STATEMENT IN ACCORDANCE WITH THE
NOTICE FROM THE EUROPEAN PATENT OFFICE
DATED 1 OCTOBER 2007 CONCERNING
BUSINESS METHODS - EPC / ERKLAERUNG
GEMAESS DER MITTEILUNG DES
EUROPAEISCHEN PATENTAMTS VOM
1.OKTOBER 2007 UEBER
GESCHAEFTSMETHODEN - EPU /
DECLARATION CONFORMEMENT AU
COMMUNIQUE DE L'OFFICE EUROP", 20071101,
1 November 2007 (2007-11-01), XP002456252,**
• **None**

**Description**

**FIELD OF THE INVENTION**

The present invention relates to a process of applying a protective coating to a vessel, wherein the protective coating is selected on the basis of a novel method which takes into account the risks associated with regions where the vessel is expected to travel. The present invention also relates to the manufacture and supply of the protective coating selected in accordance with the selection-method, and a computer system or computer program product that is used for carrying out the selection-method (completely or in part).

**BACKGROUND ART**

Protective coatings for different vessels are posed with different challenges, depending not just on the type of vessel but also the geographical location of that vessel. This is because different regions/locations will present different risks/challenges to the protective coatings on the vessel. Provided herein is a novel method for selecting the most suitable protective coating for a vessel, in particular a movable vessel. The selected protective coating is selected by taking into account the regions (locations) the vessel has been, or is expected to be located in the future, and the risks and challenges the protective coating is expected to endure as a consequence of its location(s).

Known methods for selecting a protective coating often do not take into account the location(s) of that vessel over time. Sometimes the principle that "one size fits all" is applied for selecting a protective coating for a vessel. Following this principle, the same type of coating or binder system is selected for the vessel irrespective of it's location(s) and the consequential challenges that are posed to the integrity of the protective coating as a result of its location over time. Protective coatings for vessels are also sometimes selected on the basis of cost, or the type of vessel to be coated. Consequently, the protective coating does not necessarily suit the risks and potential challenges that lay ahead. If the selected protective coating is not suitable, then the vessel will experience a greater risk of failure or damage compared to if a more suitable protective coating was selected.

It is known to use fouling-control coatings on marine vessels immersed in an aquatic environment, for instance as a top coat on underwater hulls to inhibit the settlement and growth of marine organisms such as barnacles and algae, generally by release of a biocide. Man-made structures such as boat hulls, buoys, drilling platforms, oil production rigs, and pipes which are immersed in water are prone to fouling by aquatic organisms such as green and brown algae, barnacles, mussels, and the like. This fouling is particularly a nuisance on marine vessel hulls because it increases frictional resistance during movement through the water, the consequence being reduced speeds and/or increased fuel costs. In addition, fouling makes it difficult to inspect the vessel structure for defects such as stress cracking and corrosion.

The term "fouling-control coatings" used in the present application is intended to cover, without limitation, all coatings used to inhibit the settlement and growth of marine/aquatic organisms, including for example, anti-fouling coatings and fouling-resistant/non-fouling coatings. Fouling control-coatings, include for example, vinyl resins, rosin-containing resins, rubber coatings such as those disclosed in GB 1,307,001 and US 3,702,778, fluorinated polymers such as those described in JP 04-045170, JP 61-043668 and JP 06-322294 and "self-polishing copolymer" (SPC) paints such as described in GB-A-1 457 590, EP779304, WO2005005516, WO200202698, WO2004018533 or WO201018144 and WO9937723, Silyl Acrylate systems such as described in WO 00/77102 A1, US 4,593,055, US 5,436,284, EP 0 802 243, EP 1 127 902, EP 1 127 925, EP 0 775 733, EP 1 310 530, EP 1 367 100, US 2006/0189708, and WO 2005/005516, and Copper Acrylate systems such as described in EP-A-204 456, EP-A-779 304, WO98/53015 and EP1167398.

Fouling control coatings include, for example, all coatings disclosed in the following review articles: Alistair A. Finnie and David N. Williams, Chapter 13, "Paint and Coatings Technology for the Control of Marine Fouling", in Biofouling, (Eds Durr S & Thomason JC), Wiley-Blackwell, Oxford, 2009; and/or Yebra, D.M., Kiil, S. & Dam-Johansen, K. (2004) Antifouling technology - past, present and future steps towards efficient and environmentally friendly antifouling coatings. Progress in Organic Coatings, 50, 75-104. Different marine vessels which are immersed in an aquatic environment experience vastly different fouling challenges depending on many factors such as the routes the marine vessel takes, the speed of travel and the form of the hull (i.e. the shape and material of the hull). Currently, when a protective coating is selected, the selection process does not take into account factors that indicate different risks or challenges posed by the environment. If the protective coating to be selected is a fouling-control coating, and an unsuitable fouling-control coating is selected, then the marine vessel will experience a greater risk of fouling than if a more suitable fouling-control coating is selected, leading to excessive fouling, a reduction of the speed of the marine vessel, increase in fuel costs, increase in fuel emissions into the atmosphere, an increase in the risk of translocation of invasive species from one aquatic environment to another, and an increase in frequency carrying out maintenance and repair.

The inventors have identified a need for an improved and more accurate method for selecting a more appropriate protective coating for a vessel. Selecting, providing and applying a coating to the vessel in accordance with the method provided herein, will result in a coated substrate designed to cope with the challenges expected to be endured. As previously discussed, the same cannot be said for selecting, providing and applying coatings in accordance with current methodology. Using the most suitable coating has a number of technical advantages. For example, the use of a more suitable coating will result in less damage to the coated substrate, less maintenance and repair having to be carried out, and consequently less emission of VOCs into the environment. If the coating is a fouling-control coating, there should be less fouling and consequently less drag and associated fuel costs.

## DESCRIPTION OF THE INVENTION

The present invention provides an improved (more accurate) process for selecting a protective coating for a vessel which is suitable for the predicted challenges expected to be endured.

In particular, the present invention provides an improved (more accurate) process for selecting a protective coating for a vessel, wherein the protective coating is selected on the basis of regions of the environment the vessel is expected to travel and the risks these regions of the environment pose to the deterioration of the protective effect of the protective coating.

The present invention also provides a process of applying a protective coating to a vessel comprises the following steps:

(i) selecting a protective coating, wherein the selection is made on the basis of risks associated with regions where the vessel has travelled or is expected to travel, comprising steps (a) to (e) as defined further below;
(ii) providing the protective coating selected in step (i); and then
(iii) applying the protective coating provided in step (ii) to the vessel.

Once the protective coating has been selected in accordance with the method described herein, this protective coating is *provided* and then *applied* to the vessel.

By *providing the protective coating*, we mean (i) the manufacture/preparation of the protective coating composition, and/or (ii) the sourcing/supplying of the protective coating composition, from one or more location(s) to the vessel, ready to be applied.

By *applying the protective coating* we mean: applying the protective coating composition on to the surface of the vessel thereby forming a curable and/or dryable coating film, and then allowing the curable and/or dryable coating film to cure and/or dry thereby forming a protective coating on the surface of the vessel. Application of the protective coating may be by any means, for example, by spray or by brush.

Step (i) of the process comprises the following steps

(a) dissecting the environment into regions, and associating a risk rating with each region,

(b) obtaining information about the route(s) the vessel has historically taken and/or will take in future through the environment, over a specified period of time, wherein information obtained is GPS or AIS data,

(c) computer-implemented determining which regions of the environment the vessel has travelled and/or will travel through over the specified period of time, wherein the step also includes the amount of time the vessel has spent/will spend in each region in said specified period of time,

(d) computer-implemented combining the data from steps (a), (b) and (c) to calculate the average risk rating the vessel has experienced and/or will experience in the specified period of time, and

(e) based on the average risk rating calculated in step (d), selecting a protective coating that has been associated with that average risk rating, wherein step (e) requires the average risk rating which is calculated in step (d) to be matched with the most suitable protective coating which has been pre-designated as being the most suitable protective coating for protection against that level of risk.

*Risk* in the context of the present application should be understood as the likelihood that the activity the protective coating is protecting against will occur. For example, if the coating is a fouling-control coating, the risk relates to likelihood that fouling will occur; if the coating is an anti-corrosion coating, the risk relates to the likelihood that corrosion will occur; if the coating is a coating for protection against solid and liquid particle abrasion, the risk relates to the likelihood that abrasion from liquid particles (e.g. rain) or solid particles (e.g. dust or sand) will occur; if the coating is for protection against deterioration due to UV absorbance, the risk relates to the likelihood that deterioration due to UV absorbance will occur; if the coating is for protection against ice, the risk relates to the likelihood that ice build-up will occur.

A vessel is a moveable object, capable of moving throughout the environment. For example, the vessel may be a marine vessel (a submarine, yacht, tanker ship, fishing boat, ferry, or a fresh water vessel/boat such as a canal boat, and a motor boat), land vessel (an automotive vehicle, truck, lorry, bike) or an airborne vessel (an aircraft).

The environment is all locations that the vessel may travel, be located and be in contact with. By dissecting the environment into separate regions, we mean spatially distinguishing different regions of the environment from other regions. The dissection of the environment into different regions is based on the perceived risk posed to the protective coating in that region of the environment. If the protective coating is a fouling-control coating, then the risk is related to the amount/type of fouling that may occur in that region. If the protective coating is an anticorrosive coating, then the risk is related to the amount of corrosion that may occur in that region. The spatial dissection of the environment may be in two-dimensions or in three-dimensions.

The method/process described herein could be used to select (provide and apply):

(a) a coating for protection against marine fouling, such as a marine fouling control coating, wherein the vessel is a marine vessel, and the challenge/risk faced by the coating is the risk of marine fouling,

(b) a coating for protection against corrosion, such as an anti-corrosive coating, wherein the vessel is a marine, airborne or a land vessel, and the challenge/risk faced by the coating is the risk of corrosion,

(c) a coating for protection against solid and liquid particle abrasion, such as a (cosmetic) top-coat, wherein the vessel is a marine, airborne or land vessel, and the challenge/risk faced by the vessel is the risk of abrasion from liquid particles (e.g. rain) or solid particles (e.g. dust or sand),

(d) a coating for protection against deterioration due to UV absorbance, such as a (cosmetic) top-coat, wherein the vessel is a marine, airborne or land vessel, and the challenge/risk faced by the vessel is the risk of deterioration due to UV absorbance, or

(e) a coating for protection against ice, such as an anti-ice or ice release coating, wherein the vessel is a marine, airborne or a land vessel, and the challenge/risk faced by the coating is the risk of ice build-up.

A "specified period of time", means any period of time between any two dates, whether past or future, for example, 3 months, 6 months, 1 year, 2 years, 3 years, 4 years, 5 years, 6 years, 7 years, 8 years, 9 years or 10 years or more.

One embodiment of the invention is a process of applying a fouling-control coating to a marine vessel, wherein the fouling-control coating is selected according to the method described herein. All or part of the method for selecting a fouling-control coating for a vessel may be implemented by a computer system or a computer. Another aspect of this invention is therefore a computer (system) or a computer program product for implementing part or all of the method for selecting a fouling-control coating for a vessel as described herein.

The method described herein may also be used to determine the optimum coating thickness for coating the vessel, and hence also the optimum volume of paint required for coating the vessel. Ideally, the optimum thickness is just enough to provide effective protection, for example, against fouling. Application of more than the optimum thickness of paint would lead to more than necessary organic solvent being released into the atmosphere. Application of less than the optimum thickness of paint would result in not enough protection, leading more frequent maintenance/re-coating of the vessel. If the vessel is a marine vessel and the protective coating is for protection against fouling, application of less than the optimum thickness of paint would result in greater drag when the marine vessel is in motion due to the presence of more fouling, and an associated increase fuel emissions into the atmosphere.

Another aspect of the present invention is therefore the selection, provision and application of a protective coating for a vessel, wherein the thickness (and therefore the corresponding volume) of the protective coating that is applied to the vessel is determined according to the method described herein.

The method for selecting a fouling control coating for a vessel comprises the method steps (a) to (e) described herein. In one embodiment, the vessel is a marine vessel, the environment is the Worldwide aquatic environment, the regions are fouling regions, the risk rating is the fouling risk rating, and the average risk rating is the average fouling risk rating.

Fouling-control coatings are not only applied on outer surfaces of marine vessels which are in continual contact with the aquatic environment when immersed (such as the lower surface of a vessel hull), but can also be applied to surfaces above the water-line of the aquatic environment (e.g. the boottop region of the vessel hull). Further, fouling control coatings can also be applied onto surfaces of ballast tanks of marine vessels.

It has been found by the inventors that one of the most accurate ways to select an appropriate protective coating for a vessel is to consider previous travel routes and fouling challenges already experienced over the preceding years. In many cases, the travel routes undertaken do not vary substantially over time. One embodiment of the present invention therefore relates to a method of selecting (providing and applying) a protective coating for a vessel based on the route(s) the vessel has previously travelled.

Sometimes however, there are plans for the vessel to travel alternative route(s) in the future. Should this be the case, the most accurate way to select a protective coating is not to consider past travel-routes, but to consider the planned travel route(s) of the future. Another embodiment of the present invention therefore relates to a method of selecting a protective coating for a vessel based on the routes the vessel is predicted or planned to travel.

**Step (a)**

The risk posed by the environment can vary substantially depending on location. Step (a) of the present method is to dissect the environment into separate regions, and associate a risk rating with each region.

The environment is all locations that the vessel may travel, be located and be in contact with.

There is no limit to the number, size or shape of the regions that may be defined. The spatial dissection of the environment into regions may be in two-dimensions or in three-dimensions. The shape and size of all the regions does not need to be uniform. One theory is that, the greater the number of regions, the more accurate the determination of the average risk rating posed to the vessel and hence the more accurate the selection of protective coating. Practically however, it may be preferable to dissect the environment into between 50 and 100 regions for ease of data handling.

Over the course of time, the risk in a particular region may vary. To take into account the variation in risk/challenge in a particular region throughout the year, the environment may be dissected in to different regions at multiple times of the year. Alternatively, the same region may be associated with different risk rating at different times in the year. This means that a protective coating on a stationary vessel could be deemed to experience different levels of risk over the course of time.

In one embodiment, the vessel is a marine vessel, the environment is the Worldwide aquatic environment, the risk is the fouling risk, the regions are fouling regions and the risk rating is the fouling risk rating. The Worldwide aquatic environment is intended to encompass any aquatic region in the world in which the vessel hull can be (immersed) located, including fresh-water regions and salt-water regions.

There are numerous environmental factors that can be used to assess the fouling risk posed by an aquatic environment, including (but not exclusively), the amount of chlorophyll in the aquatic environment, the salinity of the aquatic environment, the temperature of the aquatic environment, the pH of the aquatic environment, the amount of carbon dioxide in the aquatic environment, speed and/or direction of the waves, and the nutrient levels in the aquatic environment. Other factors that affect the fouling risk of the aquatic environment include the presence of underwater currents, the latitude of the region and the depth of the aquatic marine environment. For example, for a shallow, tropical, coastal region, which has an abundance of nutrients and chlorophyll in the water, will have a greater likelihood of marine life and therefore the risk of fouling is greater than when compared to a colder deep sea area, which has little or no nutrients or chlorophyll present. One or more (preferably more) of these factors can be taken into account in order assess the fouling-risk of each fouling region.

**Step (b)**

The protective coating may be selected based on the route(s) a vessel has previously travelled over a specified period of time.

Information about the routes that the vessel has historically taken could be obtained from publically available GPS data (Global positioning System) or AIS data (Automatic Identification System). Two suppliers of publically available GPS/AIS data are ORBCOMM and ExactEarth (www.ExactEarth.com or www.Orbcomm.com). Provided the vessel has a GPS or AIS transponder, GPS/AIS data on a vessel's past movements is publically available. Information about the routes a vessel has historically taken is based on GPS data or AIS data because journey and speed data according to the vessel's own logs may not to be as accurate as publically available GPS/AIS data. A protective coating which is selected based on flawed data, leads to an inappropriate protective coating being selected for use.

Alternatively, the protective coating may be selected based on the route(s) the vessel is expected to travel over a specified period of time. This information could be obtained from the person who decides on future travel routes, for example, the vessel owner.

Step (a) and step (b) of the method of selection may be carried out in any order.

**Step (c)**

Once the environment has been dissected into separate regions and associated with a rating (step (a)), and the information about the route(s) the vessel has historically taken over a specified period of time, or will take over a specified period of time, has been obtained (step (b)), then these two sets of information can be overlaid with one another to accurately determine (i.e. calculate) which regions the vessel has travelled through, or will travel through, over the specified period of time (step (c)).

**Step (d)**

Once the information in step (c) is calculated, it can then be used to calculate the average risk rating the vessel has experienced, or will experience, in the specified period of time (step (d)).

In one embodiment of the invention, the risk rating for a vessel in a region is a function of (i) the risk rating of said region and (ii) the time the vessel has spent or will spend in said region.

In an alternative embodiment of the invention, the risk rating for a vessel in a region is a function of (i) the risk rating of said region, (ii) the amount of time the vessel has spent in a said region, and also (iii) the average speed of the vessel in said region. The average speed of the vessel can be determined from the information gathered in step (b). This alternative embodiment may be preferred because it takes into account the speed of the moving vessel in each region.

For example, if the vessel is a marine vessel, the hull of a marine vessel having a high average speed would be expected to have a lower fouling risk in a fouling region than the same hull having a lower average speed or which is stationary for a greater proportion of time in that fouling region. The theory behind this is that the slower the marine vessel travels, the more easily marine life can adhere to the surfaces of the marine vessel.

On the other hand, if the vessel is a land-travelling vehicle, the body of a land-travelling vehicle having a high average speed would be expected to have a higher risk with respect to abrasion from solid and liquid particles than the same land-vehicle having a lower average speed or which is stationary. The theory behind this is that the slower the land-vehicle travels, the less of an impact on the protective coating experiences from liquid and solid particles, and the less potential for damage to the protective coating.

The skilled person will appreciate that there are a number of different ways an average can be calculated. The most commonly used average is the arithmetic mean. Other averages include the geometric mean, the harmonic mean, the mode and median. Other less commonly used averages include the quadratic mean, generalized mean, weighted mean, truncated mean, interquartile mean, midrange and winsorized mean, trimean, trimedian, and normalized mean.

**Step (e)**

Step (e) of the method requires the average risk rating which is calculated in step (d) to be matched with the most suitable protective coating which has been pre-designated as being the most suitable protective coating for protection against that level of risk.

Therefore in order for step (e) of the present method to be carried out it is necessary to pre-designate/associate for each average risk rating which may be calculated in step (d) with the most suitable protective coating for that vessel against that level of risk.

For example for a marine vessel which has an extremely high average fouling risk value, it would be necessary to select a very high performing fouling-control coating associated with that fouling risk value. For a marine vessel having an extremely low average fouling risk value, it would be necessary to select lower performing fouling-control coating associated with that average risk value.

**Other factors**

Other factors which may also be taken into consideration when selecting the most suitable protective coating include, for example, vessel characteristics, such as shape of the body of the vessel (i.e. shape of marine vessel hull), the amount and type of existing protective coatings already on the vessel, the structural material of the body of the vessel, regulatory constraints of using certain protective coatings, and potential lifetime and cost of the protective coating scheme.

**The Use of Computer Systems and Programs**

Steps (c) and (d) are computer-implemented. A vast quantity of information is obtained and required in steps (a) and (b) of the present invention. To facilitate the storage of the information from steps (a) and (b) and then the overlaying and computation of this information to determine which regions the vessel has travelled, or will travel, in a specified period of time (step c) and to calculate the average risk rating the vessel has experienced, or will experience, in the specified period of time (step d), a computer or a computer program product may be used.

The final step of the method, step (e), is to select a protective coating that has been associated with the average risk rating determined in step (d). Although step (e) can be implemented by a computer or a computer program product, it may not be necessary.

**Examples**

The invention will now be elucidated with reference to the following simple examples. These examples are intended to illustrate the invention but are not to be construed as limiting in any manner the scope thereof.

*Example 1*

The Worldwide marine environment was dissected into 64 geographical regions. Each geographical region was associated with a fouling risk rating of 1 to 5 (1= Very low, 2=Low, 3=Medium, 4=High, 5=Very high) depending on (i) the amount of chlorophyll and nutrients in the water, and (ii) the time of year.

The fouling risk rating for each geographical region was determined on the basis of the amount of chlorophyll in that region. The higher the amount of chlorophyll in a region has been linked to the region having a greater amount of marine life, which is expected to have a greater the risk of fouling.

'Vessel A' travelled from Northern England to Sweden, and Finland, then down to the north of Spain, over 3 months, between January and March 2010. The information on the exact route travelled by Vessel A was tracked using AIS.

It is planned that the Vessel A will continue to make the same journey repeatedly over the coming years.

From the historical location data of Vessel A, the amount of time the Vessel spent in fouling regions designated with a Fouling Risk of 1, 2, 3, 4 or 5 was determined.

The results are tabulated in Table 1.

Table 1

| Fouling Risk | Fouling Risk Rating (x) | % of Time (y) |
|---|---|---|
| Very low | 1 | 0 |
| Low | 2 | 86 |
| Medium | 3 | 12 |
| High | 4 | 2 |
| Very High | 5 | 0 |

The mean average fouling risk rating Vessel A experienced in the 3 month period of time was 1.3. [calculation:

$$[\text{calculation: } \sum xy \,/\, \sum y : (1 \times 0) + (2 \times 86) + (3 \times 12) + (4 \times 2) + (5 \times 0)/(0 + 86 + 12 + 2 + 0) = 1.3]$$

The inventors selected a standard fouling control product, which was pre-associated with the average fouling risk rating of 1.3.

The inventors provided and applied the selected standard fouling control product to Vessel A.

Without carrying out this method, the inventors would have selected a premium fouling-control product instead, resulting in unnecessary expense for the boat owner and no associated benefit with respect to fouling protection.

*Example 2*

However if the same Vessel A was expected to change it's route and travel from the Gulf of Oman, to Japan, via Singapore, Hong Kong, South Korea, and the US (Seattle), in the same period, then the fouling-control coating selected for Vessel A according to the method described herein would be different.

Table 2 tabulates the amount of predicted time Vessel A, for this route, would be expected to spend in fouling regions designated with a Fouling Risk of 1, 2, 3, 4 or 5.

Table 2

| Fouling Risk | Fouling Risk Rating (x) | % of Time (y) |
|---|---|---|
| Very low | 1 | 2 |
| Low | 2 | 9 |

(continued)

| Fouling Risk | Fouling Risk Rating (x) | % of Time (y) |
|---|---|---|
| Medium | 3 | 22 |
| High | 4 | 53 |
| Very High | 5 | 14 |

The mean average fouling risk rating Vessel A would be expected to experience in the 3 month period of time is 3.7.
calculation:

$$\sum xy / \sum y : (1x2)+(2x9)+(3x22)+(4x53)+(5x14)/(2+9+22+53+14) = 3.7$$

For this predicted travel route, the inventors would recommend, provide and apply to the vessel, a high specification self-polishing copolymer based coating system which has been pre-associated with the average fouling risk rating of 3.7.

**Claims**

1. A process of applying a protective coating to a vessel comprising the following steps:

   (i) selecting a protective coating, wherein the selection is made on the basis of risks associated with regions where the vessel has travelled or is expected to travel;
   (ii) providing the protective coating selected in step (i), and then
   (iii) applying the protective coating provided in step (ii) to the vessel,
   wherein step (i) comprises the following steps:

   (a) dissecting the environment into separate regions, and associating a risk rating with each region,
   (b) obtaining information about the route(s) the vessel has historically taken and/or will take in future through the environment, over a specified period of time, wherein information obtained is GPS or AIS data,
   (c) computer-implemented determining which regions of the environment the vessel has travelled and/or will travel through over the specified period of time, wherein the step also includes determining the amount of time the vessel has spent/will spend in each region in said specified period of time,
   (d) computer-implemented combining the data from steps (a), (b) and (c) to calculate the average risk rating the vessel has experienced and/or will experience in the specified period of time, and
   (e) based on the average risk rating calculated in step (d), selecting a protective coating that has been associated with that average risk rating, wherein step (e) requires the average risk rating which is calculated in step (d) to be matched with the most suitable protective coating which has been pre-designated as being the most suitable protective coating for protection against that level of risk.

2. The process of applying a protective coating to a vessel as claimed in Claim 1, wherein the protective coating is for one of the following:

   - protection against fouling, such as a fouling control-coating, and the vessel is a marine vessel,
   - protection against corrosion, such as an anti-corrosive coating, and the vessel is a marine, airborne or a land vessel,
   - protection against solid and liquid particle abrasion, and the vessel is a marine, airborne or land vessel,
   - protection against deterioration as a result of UV absorbance, and the vessel is a marine, airborne or land vessel, or
   - protection against ice, such as an anti-ice or ice release coating, and the vessel is a marine, airborne or a land vessel.

3. The process of applying a protective coating to a vessel as claimed in Claims 1 or 2, wherein the information obtained in step (i)(b) includes information about the speed of the vessel travelling in the environment.

4. The process of applying a protective coating to a vessel as claimed any of Claims 1, 2(a), or 3, which is a process of applying a marine fouling control coating to a marine vessel, wherein the regions are a fouling regions, the risk rating is the fouling risk rating, the environment is the worldwide aquatic environment, and wherein the fouling risk rating of each fouling region of the worldwide aquatic environment in step (i)(a) is determined on the basis of at least one of the following:

   (a) environmental data recorded in the fouling region, for example the amount of chlorophyll, the salinity, the temperature, the pH, the amount of $CO_2$, speed and/or direction of the waves, and the nutrient levels, in the fouling region,
   (b) the latitude of the fouling region,
   (c) the distance of the fouling region from the coastline or from land,
   (d) the depth of the aquatic environment of the fouling region.

5. The process of applying a protective coating to a vessel as claimed in of Claims 1-4 wherein the method in step (i) is used to calculate an optimum thickness of the coating required to coat the vessel.

6. The process of applying a protective coating to a vessel as claimed in Claim 5, wherein the protective coating is applied to the vessel at the calculated optimum thickness.

7. The process of applying a protective coating to a vessel as claimed in any preceding claim wherein step (ii) includes the manufacture of the protective coating selected in step (i).


**Patentansprüche**

1. Verfahren zum Aufbringen einer Schutzbeschichtung auf ein Fahrzeug, umfassend die folgenden Schritte:

   (i) Auswählen einer Schutzbeschichtung, wobei die Auswahl auf der Grundlage von Risiken durchgeführt wird, die mit Regionen verbunden sind, in denen sich das Fahrzeug bewegt hat oder voraussichtlich bewegen wird;
   (ii) Bereitstellen der bei Schritt (i) ausgewählten Schutzbeschichtung, und dann
   (iii) Aufbringen der bei Schritt (ii) bereitgestellten Schutzbeschichtung auf das Fahrzeug,

   wobei Schritt (i) die folgenden Schritte umfasst:

   (a) Aufteilen des Umfelds in getrennte Regionen und Zuordnen einer Risikoeinstufung zu jeder Region,
   (b) Erhalten von Informationen über die Route(n), die das Fahrzeug in der Vergangenheit durch das Umfeld genommen hat und/oder in der Zukunft nehmen wird, über einen bestimmten Zeitraum, wobei die erhaltenen Informationen GPS- oder AIS-Daten sind,
   (c) computerimplementiertes Bestimmen, in welchen Regionen des Umfelds sich das Fahrzeug in dem bestimmten Zeitraum bewegt hat und/oder durch welche es sich bewegen wird, wobei der Schritt auch die Bestimmung der Zeitdauer umfasst, während der sich das Fahrzeug in dem bestimmten Zeitraum in jeder Region aufgehalten hat/aufhalten wird,
   (d) computerimplementiertes Kombinieren der Daten aus den Schritten (a), (b) und (c), um die mittlere Risikoeinstufung zu bestimmen, die das Fahrzeug in dem bestimmten Zeitraum erfahren hat und/oder erfahren wird, und
   (e) auf der Grundlage der bei Schritt (d) berechneten mittleren Risikoeinstufung Auswählen einer Schutzbeschichtung, die dieser mittleren Risikoeinstufung zugeordnet worden ist, wobei Schritt (e) erfordert, dass die bei Schritt (d) berechnete mittlere Risikoeinstufung der am besten geeigneten Schutzbeschichtung entspricht, von der zuvor bestimmt worden ist, dass sie die am besten geeignete Schutzbeschichtung zum Schutz gegen dieses Risikoniveau ist.

2. Verfahren zum Aufbringen einer Schutzbeschichtung auf ein Fahrzeug gemäß Anspruch 1, wobei die Schutzbeschichtung für eines der folgenden ist:

   - Schutz gegen Bewuchs, wie z. B. eine bewuchshemmende Beschichtung, wobei das Fahrzeug ein Wasserfahrzeug ist,
   - Schutz gegen Korrosion, wie z. B. eine korrosionshemmende Beschichtung, wobei das Fahrzeug ein Wasser-, Luft- oder Landfahrzeug ist,

- Schutz gegen Abrasion durch feste und flüssige Partikel, wobei das Fahrzeug ein Wasser-, Luft- oder Landfahrzeug ist,
- Schutz gegen Schädigung als Folge von UV-Absorption, wobei das Fahrzeug ein Wasser-, Luft- oder Landfahrzeug ist, oder
- Schutz gegen Eis, wie z. B. eine Antivereisungs- oder Enteisungsbeschichtung, wobei das Fahrzeug ein Wasser-, Luft- oder Landfahrzeug ist.

3. Verfahren zum Aufbringen einer Schutzbeschichtung auf ein Fahrzeug gemäß Ansprüchen 1 oder 2, wobei die bei Schritt (i)(b) erhaltenen Informationen Information über die Geschwindigkeit, mit der sich das Fahrzeug in dem Umfeld bewegt, umfassen.

4. Verfahren zum Aufbringen einer Schutzbeschichtung auf ein Fahrzeug gemäß einem der Ansprüche 1, 2(a) oder 3, das ein Verfahren zum Aufbringen einer wasserbewuchshemmenden Beschichtung auf ein Wasserfahrzeug ist, wobei die Regionen Bewuchsregionen sind, die Risikoeinstufung die Bewuchsrisikoeinstufung ist, das Umfeld das weltweite Gewässerumfeld ist und wobei die Bewuchsrisikoeinstufung jeder Bewuchsregion des weltweiten Gewässerumfelds bei Schritt (i)(a) auf der Grundlage wenigstens eines der folgenden bestimmt wird:

   (a) in der Bewuchsregion aufgezeichneten Umgebungsdaten, wie z. B. die Chlorophyllmenge, der Salzgehalt, die Temperatur, der pH-Wert, die $CO_2$-Menge, die Geschwindigkeit und/oder Richtung der Wellen und der Nährstoffgehalt in der Bewuchsregion,
   (b) der Breitengrad der Bewuchsregion,
   (c) der Abstand der Bewuchsregion von der Küste oder von Land,
   (d) die Tiefe des Gewässerumfelds der Bewuchsregion.

5. Verfahren zum Aufbringen einer Schutzbeschichtung auf ein Fahrzeug gemäß Ansprüchen 1-4, wobei das Verfahren bei Schritt (i) verwendet wird, um eine optimale Dicke der zum Beschichten des Fahrzeugs erforderlichen Beschichtung zu berechnen.

6. Verfahren zum Aufbringen einer Schutzbeschichtung auf ein Fahrzeug gemäß Anspruch 5, wobei die Schutzbeschichtung mit der berechneten optimalen Dicke auf das Fahrzeug aufgebracht wird.

7. Verfahren zum Aufbringen einer Schutzbeschichtung auf ein Fahrzeug gemäß einem der vorstehenden Ansprüche, wobei Schritt (ii) die Herstellung der bei Schritt (i) ausgewählten Schutzbeschichtung umfasst.

**Revendications**

1. Procédé d'application d'un revêtement protecteur à une enveloppe comprenant les étapes suivantes :

   (i) sélection d'un revêtement protecteur, la sélection étant réalisée sur la base de risques associés à des régions où l'enveloppe a voyagé ou est censée voyager ;
   (ii) obtention du revêtement protecteur sélectionné à l'étape (i) et, ensuite,
   (iii) application du revêtement protecteur obtenu à l'étape (ii) à l'enveloppe,
   dans lequel l'étape (i) comprend les étapes suivantes :

   (a) découpage de l'environnement en régions séparées, et association d'un score de risque à chaque région,
   (b) obtention d'informations sur le/les itinéraire(s) que l'enveloppe a historiquement pris et/ou prendra dans le futur à travers l'environnement, sur un laps de temps spécifié, les informations obtenues étant des données GPS ou AIS,
   (c) détermination par ordinateur des régions de l'environnement à travers lesquelles l'enveloppe a voyagé et/ou voyagera sur le laps de temps spécifié, l'étape comportant également la détermination de la quantité de temps que l'enveloppe a passé/passera dans chaque région dans ledit laps de temps spécifié,
   (d) combinaison par ordinateur des données issues des étapes (a), (b) et (c) pour calculer le score de risque moyen que l'enveloppe a connu et/ou connaîtra dans le laps de temps spécifié, et
   (e) sur la base du score de risque moyen calculé à l'étape (d), sélection d'un revêtement protecteur qui a été associé à ce score de risque moyen, l'étape (e) nécessitant que le score de risque moyen qui est calculé à l'étape (d) corresponde au revêtement protecteur le mieux adapté qui a été préconçu comme étant le revêtement protecteur le mieux adapté pour une protection contre un niveau de risque.

EP 2 794 774 B1

**2.** Procédé d'application d'un revêtement protecteur à une enveloppe selon la revendication 1, dans lequel le revêtement protecteur est destiné à une des situations suivantes :

- protection contre la salissure, comme un revêtement de contrôle de la salissure, et l'enveloppe est une enveloppe marine,
- protection contre la corrosion, comme un revêtement anticorrosion, et l'enveloppe est une enveloppe marine, aérienne ou terrestre,
- protection contre l'abrasion par les particules solides ou liquides, et l'enveloppe est une enveloppe marine, aérienne ou terrestre,
- protection contre la détérioration résultant de l'absorbance UV, et l'enveloppe est une enveloppe marine, aérienne ou terrestre, ou
- protection contre le givre, comme un revêtement antigivrage ou de dégivrage, et l'enveloppe est une enveloppe marine, aérienne ou terrestre.

**3.** Procédé d'application d'un revêtement protecteur à une enveloppe selon la revendication 1 ou 2, dans lequel les informations obtenues à l'étape (i)(b) comportent des informations sur la vitesse à laquelle l'enveloppe voyage dans l'environnement.

**4.** Procédé d'application d'un revêtement protecteur à une enveloppe selon l'une quelconque des revendications 1, 2(a) et 3, qui est un procédé d'application d'un revêtement de contrôle de la salissure marine à une enveloppe marine, dans lequel les régions sont des régions de salissure, le score de risque est le score de risque de salissure, l'environnement est l'environnement aquatique mondial, et dans lequel le score de risque de salissure de chaque région de salissure de l'environnement aquatique mondial à l'étape (i)(a) est déterminé sur la base d'au moins un des éléments suivants :

(a) des données environnementales enregistrées dans la région de salissure, par exemple la quantité de chlorophylle, la salinité, la température, le pH, la quantité de $CO_2$, la vitesse et/ou la direction des vagues, et les niveaux de nutriments, dans la région de salissure,
(b) la latitude de la région de salissure,
(c) la distance de la région de salissure par rapport au littoral ou par rapporlaterre,
(d) la profondeur de l'environnement aquatique de la région de salissure.

**5.** Procédé d'application d'un revêtement protecteur à une enveloppe selon l'une quelconque des revendications 1 à 4, le procédé à l'étape (i) étant utilisé pour calculer une épaisseur optimale du revêtement nécessaire pour recouvrir l'enveloppe.

**6.** Procédé d'application d'un revêtement protecteur à une enveloppe selon la revendication 5, dans lequel le revêtement protecteur est appliqué à l'enveloppe à l'épaisseur optimale calculée.

**7.** Procédé d'application d'un revêtement protecteur à une enveloppe selon une quelconque revendication précédente dans lequel l'étape (ii) comporte la fabrication du revêtement protecteur sélectionné à l'étape (i).

11

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- GB 1307001 A
- US 3702778 A
- JP 4045170 A
- JP 61043668 A
- JP 6322294 A
- GB 1457590 A
- EP 779304 A
- WO 2005005516 A
- WO 200202698 A
- WO 2004018533 A
- WO 201018144 A
- WO 9937723 A
- WO 0077102 A1
- US 4593055 A
- US 5436284 A
- EP 0802243 A
- EP 1127902 A
- EP 1127925 A
- EP 0775733 A
- EP 1310530 A
- EP 1367100 A
- US 20060189708 A
- EP 204456 A
- WO 9853015 A
- EP 1167398 A

### Non-patent literature cited in the description

- Paint and Coatings Technology for the Control of Marine Fouling. **ALISTAIR A. FINNIE ; DAVID N. WILLIAMS.** Biofouling. Wiley-Blackwell, 2009
- **YEBRA, D.M. ; KIIL, S. ; DAM-JOHANSEN, K.** Antifouling technology - past, present and future steps towards efficient and environmentally friendly antifouling coatings. *Progress in Organic Coatings,* 2004, vol. 50, 75-104